(19) Europäisches Patentamt / European Patent Office / Office européen des brevets

(11) **EP 4 127 085 B1**

(12) **EUROPEAN PATENT SPECIFICATION**

(45) Date of publication and mention
of the grant of the patent:
**27.03.2024 Bulletin 2024/13**

(21) Application number: **21720651.5**

(22) Date of filing: **01.04.2021**

(51) International Patent Classification (IPC):
**C09D 13/00** (2006.01)

(52) Cooperative Patent Classification (CPC):
**C09D 13/00**

(86) International application number:
**PCT/US2021/025307**

(87) International publication number:
**WO 2021/202829 (07.10.2021 Gazette 2021/40)**

(54) **WATER-SOLUBLE COLORING COMPOSITIONS COMPRISING ALCOHOL ALKOXYLATES WITH 40 TO 160 ETHOXY UNITS DERIVED FROM PRIMARY ALCOHOLS HAVING A CHAIN LENGTH BETWEEN 20 AND 30 CARBON ATOMS**

WASSERLÖSLICHE FÄRBEMITTEL ENTHALTEND ALKOHOLALKOXYLATE MIT 40 BIS160 ETHOXYEINHEITEN AUSGEHEND VON PRIMÄREN ALKOHOLEN MIT EINER KETTENLÄNGE ZWISCHEN 20 UND 30 KOHLENSTOFFATOMEN

COMPOSITIONS COLORANTES HYDROSOLUBLES COMPRENANT DES ALCOXYLATES D'ALCOOL AYANT DE 40 À 160 UNITÉS ÉTHOXY DÉRIVÉS D'ALCOOLS PRIMAIRES AYANT UNE LONGUEUR DE CHAÎNE COMPRISE ENTRE 20 ET 30 ATOMES DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2020 US 202063004097 P**

(43) Date of publication of application:
**08.02.2023 Bulletin 2023/06**

(73) Proprietor: **Sasol (USA) Corporation
Houston, TX 77079 (US)**

(72) Inventors:
• **BICKEL, Jennifer**
  **Westlake, LA 70669 (US)**
• **NORMAND, Ollie**
  **Westlake, LA 70669 (US)**

(74) Representative: **Müller Schupfner & Partner
Patent- und Rechtsanwaltspartnerschaft mbB
Schellerdamm 19
21079 Hamburg (DE)**

(56) References cited:
EP-A1- 3 533 843      WO-A1-94/10237
WO-A1-2012/051406     CN-A- 109 517 449
US-A- 5 380 357

**Description**

*Cross-Reference to Related Application*

This application claims priority to US 63/004,097 filed April 2, 2020.

*Field of the Invention*

The invention relates to water-soluble coloring compositions comprising alcohol alkoxylates having 40 to 160 ethoxy units and derived from a primary alcohol having a chain length between 20 and 30 carbon atoms.

*Background of the invention*

Water-soluble coloring compositions are used in water-soluble paints, poster paints, for color brushes and for roller balls, crayons and the like. Such compositions comprise pigments, dyes and/or other coloring substances, which can be applied to different surfaces and easily be removed by washing and/or pouring water over them.

Crayons or wax pastels are sticks of colored wax, charcoal, chalk or other material used for writing or drawing. A crayon made of pigment with a dry binder is a pastel; when made of oiled chalk, it is called an oil pastel. There are also watercolor crayons, sometimes called water-soluble crayons.

Crayons are available at a range of prices and are easy to work with. They are less messy than most paints and markers, blunt (removing the risk of sharp points present when using a pencil or pen), typically nontoxic, and available in a wide variety of colors. These characteristics make them particularly good instruments for teaching small children to draw in addition to being used widely by student and professional artists.

Traditional crayons are still comprised of paraffin waxes, pigments, and filler material. Despite being designed for writing on paper, many children write with crayons on walls, tables, and other surfaces. Wax crayons are difficult to remove from surfaces and often require scraping or melting, which may damage the underlying surface.

In 1990 Colin Snedeker, a chemist for Binney & Smith (the then-parent company of Crayola), developed the first washable crayons in response to consumer complaints regarding stained fabrics and walls. In the related patent (WO9004621) solid marking compositions comprising a polyethylene glycol resin component, a water-soluble surfactant and a pigment are disclosed.

In a similar patent from 1990, EP0434163, water-soluble crayon compositions comprising one or more water-soluble alkoxylation products and a coloring agent are disclosed, wherein the alkoxylation products can be fatty alcohol ethoxylates.

In US5380357 from 1995 improved water-soluble crayons comprising at least one ethoxylated alcohol, a further water-soluble material selected from the group of ethoxylated sorbitan fatty acid esters, ester derivatives, phenols, ethers and polymeric derivatives and at least a pigment or dye without polyethylene glycols are disclosed. The ethoxylated alcohol is derived from primary linear alcohols (e.g. UNITHOX 480 or 490). The absence of polyethylene glycol reduced the ghosting or residue left on a surface when washed with water. Similar systems of pigment dispersions in ethoxylated alcohols are presented in the publication, US2013/0195784.

US20190048220 tried to overcome the existing drawbacks (e.g. stickiness, little break strength, leaving hands messy) of water-soluble crayons comprising no polyethylene glycols such as the ones from US5380357 and EP0434163 by mixing at least one wax with an ethoxylated fatty alcohol, stearin, a filler and at least one pigment.

There still is a need for water-soluble coloring compositions, which do not contain a lot of different ingredients such as paraffin waxes or stearin and/or surfactants as well as dispersing agent, which wash away faster and with no mechanical action required and which can also be used as watercolor by applying a wet brush to the surface of the composition. Furthermore, the coloring composition should stay intact at higher temperatures, show a good color development on paper and should not flake or break during use.

*Description of the invention*

It is surprisingly found that water-soluble coloring compositions comprising

- at least one alcohol alkoxylate of the formula (I)

$$R - O - (C_zH_{2z}O)_x - H \qquad (I)$$

- wherein R is a linear or branched alkyl having a total number of carbon atoms from 20 to 30;

- z has a value of 2 or 3; and
- x has a value from 40 to 160;

- at least one filler; and
- at least one coloring substance;

show superior stability, washability, and pigment dispersibility.

Preferably, R is a linear or branched alkyl having a total number of carbon atoms from 22 to 30. More preferably, R is a linear or branched alkyl having a total number of carbon atoms from 23 or 24 to 30 and most preferably from 24 to 28. The alkyl moiety "R" may also be a mixture of such alkyl entities having an individual carbon count/molecule consisting essentially of from 20 to 30 and wherein the number average carbon count of the mixture is from 20 to 30 per molecule, preferably from 22 to 30 per molecule, and more preferably from 22 to 28 per molecule.

Preferably, z is 2, so that the alcohol alkoxylate of formula (I) is an alcohol ethoxylate.

Preferably, x has a value of from 45 to 155. More preferably, x has a value of from 100 to 150.

The alcohol ethoxylate may be produced by reaction of a corresponding alcohol with ethylene oxide (EO) over a suitable ethoxylation catalyst. Suitable catalysts are those derived from the Group IA and Group IIA metals including potassium, sodium, calcium, magnesium; typically, the metal is present as a base salt and notably its hydroxide. Certain catalyst species are recognized by their ability to produce narrow range ethoxylated alcohols. Catalysts derived from Group IIA metals, especially calcium or magnesium are typically recognized as being narrow range ethoxylation catalysts. In contrast catalysts derived from Group IA metals, such as potassium hydroxide are generally recognized as giving broad range ethoxylated alcohols.

For the presently disclosed invention; preferably, the alcohol ethoxylate is produced by reaction over a narrow range ethoxylation catalyst, more preferably over a calcium-containing ethoxylation catalyst providing for narrow range ethoxylated alcohols. Such catalysts and use thereof to produce ethoxylated alcohols are known to the person skilled in the art and exemplified by the teachings of, for example, US Patent 4,754,075. Exemplary of a suitable calcium-containing ethoxylation catalyst is the proprietary catalyst system developed by Sasol (USA) Corporation and as disclosed in US Patent Numbers 4,775,653; 4,835,321; 5,220,077; 5,626,121; 8,329,609 and 9,802,879, the disclosures of which are all incorporated herein by reference.

The alcohol alkoxylate of formula (I) may additionally have, independent of each other, one or more of the following properties:

- an average EO-content of from 85 to 95 wt.-%, preferably of from 88 to 95 wt. -%;
- a hydrophilic-lipophilic balance (HLB) number of from 17 to 20, preferably of from 17.5 to 19.5;
- a hydroxyl number of from 5 to 25, preferably of from 8 to 22;
- an average molecular weight of at least 2000 g/mol, preferably of at least 3000 g/mol; and more preferably of at least 5000 g/mol;
- a cloud point of from 60 to 75°C, preferably of from 65 to 73°C;
- a melting (range) of from 50 to 65°C, preferably of from 54 to 62°C;
- a time to dissolve in water of from 1200 to 4000 seconds, preferably of from 1300 to 3000 seconds, more preferably at maximum 2500 seconds.

The number and content of ethoxy-units is calculated based on molecular weight obtained by the gas chromatogram of the selected alcohol and the nuclear magnetic resonance spectrum of the ethoxylated alcohols from which the ratio of alcohol- to ethoxy-groups is obtained.

Molecular weight of alcohol = Average molecular weight from gas chromatogram

Average EO-content = Calculated from signal ratio of alcohol-chain to ethoxy groups in NMR-spectrum

Molecular weight of alcohol ethoxylate = Molecular weight of alcohol / (1- Average EO-content)

Number of EO-units (x in the alcohol alkoxylate of formula (I)) = (MW of alcohol ethoxylate – MW of alcohol) / 44 g/mol

The HLB-value is calculated according to the Griffin's method as follows:

$$HLB = 20 * M_h / M$$

$M_h$ = molecular weight of the hydrophilic portion of the molecule
M = molecular weight of the whole molecule

The hydroxyl-number is determined according to European standard method DIN EN 13926 and the cloud point is determined according to ASTM D2024. The melting point/range is determined according to standard method ASTM D-127.

The solubility (time to dissolve) is determined by putting a defined amount of alcohol ethoxylate (1 g) in a beaker with 99 ml water at ambient temperature (20°C) and stirring it with a magnetic stirrer at 300 rpm until the alcohol ethoxylate is completely dissolved.

In further preferred embodiments the water-soluble coloring compositions comprise

- 10 to 90 wt.-% alcohol ethoxylate, preferably 15 to 50 wt.-% alcohol ethoxylate, more preferably 17.5 to 35 wt.-% alcohol ethoxylate;
- 90 to 10 wt.-% filler, preferably 85 to 50 wt.-% filler, more preferably 82.5 to 65 wt.-% filler, whereas the filler preferably comprises calcium carbonate, talc, bentonite clay, kaolin clay, or mixtures thereof; and
- 1 to 5 wt.-% coloring substance in the form of pigment or dye, preferably 1.5 to 2.5 wt.-% pigment or dye, whereas the pigment or dye preferably comprises Violet 19, Green LX-11774, Orange LX 11360, ultramarine pink, titanium dioxide, methylene blue, iron blue, red aluminum lake dye, red calcium lake dye, or mixtures thereof.

In preferred embodiments, the coloring substance is active in the visual wavelength range of 400 nm to 800 nm of the electromagnetic spectrum of light.

In another embodiment of the invention, the water-soluble coloring compositions comprise

- 15 to 60 wt.-% alcohol ethoxylate, preferably 20 to 40 wt.-% alcohol ethoxylate;
- 85 to 40 wt.-% filler, preferably 80 to 60 wt.-% filler, whereas the filler preferably comprises calcium carbonate, talc, bentonite clay, kaolin clay, or mixtures thereof; and
- 1 to 5 wt.-% coloring substance in the form of pigment or dye, preferably 1.5 to 2.5 wt.-% pigment or dye, whereas the pigment or dye preferably comprises Violet 19, Green LX-11774, Orange LX 11360, ultramarine pink, titanium dioxide, methylene blue, iron blue, red aluminum lake dye, red calcium lake dye, or mixtures thereof.

The invention also includes a method of producing water-soluble coloring composition comprising the steps of

- providing an alcohol alkoxylate of formula the formula (I)

$$R - O - (C_zH_{2z}O)_x - H \qquad (I)$$

- wherein R is a linear or branched alkyl having a total number of carbon atoms from 20 to 30;
- z has a value of 2 or 3; and
- x has a value from 40 to 160;

- providing a filler;
- providing a coloring substance;
- melt blending said alcohol alkoxylate, filler and coloring substance under stirring and heating to obtain a melt-blend;
- shaping the melt-blend in a selected form; and
- cooling down the melt-blend so that it solidifies.

In a preferred embodiment the melt-blend is shaped in the form of a rod or a stick.

Furthermore, the melt-blending is preferably conducted in an injection-molding apparatus and the water-soluble

coling composition is produced by injection molding or in an extruder apparatus and the water-soluble coloring composition is produced by extrusion.

Another alternative is the shaping of the melt-blend comprising

- decanting or pouring the melt-blend into a heated mold;
- cooling down the melt-blend in the mold with rotating blades so that it solidifies; and
- removing, as a casting, the solidified melt-blend from the mold.

The invention also includes the use of an alcohol alkoxylate of the formula (I)

$$R - O - (C_zH_{2z}O)_x - H \qquad (I)$$

- wherein R is a linear or branched alkyl having a total number of carbon atoms from 20 to 30;
- z has a value of 2 or 3; and
- x has a value from 40 to 160,

in water-soluble coloring compositions.

This use preferably improves: the mechanical stability of the coloring compositions; the pigment dispersibility, and; the washability as well as the color development of the coloring compositions when applied to different surfaces and/or the ability to remove the coloring compositions with water from any surface to which it has been applied.

*Examples*

The alcohol ethoxylates from Table 1 have been used to prepare water-soluble crayon compositions according to Tables 2 and 3. The MAGNATHOX branded alcohol ethoxylates are new products available from Sasol and have not previously been available for crayon compositions. The alcohol ethoxylates sold under the trademark of UNITHOX are available from Baker-Hughes; and those under the trademark of ALFONIC available from Sasol.

Table 1: Properties of alcohol ethoxylates used to prepare crayon compositions.

| Properties | Invention MAGNATHOX 20+N-50 | Invention MAGNATHOX 20+N-75 | Invention MAGNATHOX 20+N-100 | Invention MAGNATHOX 20+N-150 | Comp. ALFONIC 1214-30 | Comp. Unithox 480 | Comp. Unithox 490 |
|---|---|---|---|---|---|---|---|
| Average EO content (wt %) [1] | 88 | 90 | 93 | 95 | 87 | 80 | 90 |
| Number of EO-units [2] | 45 | 75 | 100 | 150 | 30 | 42 | 95 |
| Carbon atom content ("R") | C20+ (av. 21.5) | C20+ (av. 21.5) | C20+ (av 21.5) | C20+ (av. 21.5) | C12/14 | C32 (av.) | C32 (av.) |
| Molecular weight of alcohol (g/mol) [3] | 319 | 319 | 319 | 319 | 199 | 460 | 460 |
| HLB [4] | 17.6 | 18.2 | 18.6 | 19.0 | 17.4 | 16 | 18 |
| Hydroxyl number DIN EN 13926 | 20-22 | 16-18 | 12-14 | 8-10 | 36 | 22 | 12 |
| Cloud point (°C) ASTM D2204 | 69-73 | 69-70 | 68-69 | 65-67 | 75-75 | n.a. due to high melting | n.a. due to high melting |
| Melting point/ range (°C) ASTM D-127 | 54-57 | 58-60 | 50-54 | 60-62 | 48.5 | 86 | 71 |
| Molecular weight (g/mol) [5] | 2658 | 3606 | 4615 | 6380 | 1534 | 2300 | 4600 |
| Time to dissolve (sec) [6] | 2068 | 2940 | 1920 | 1306 | 1180 | / | 4473 |

The number and content of ethoxy-units is calculated based on molecular weight of the used alcohol obtained by the gas chromatogram and the nuclear magnetic resonance spectrum of the alcohol ethoxylates from which the ratio of alcohol- to ethoxy-groups is obtained.

[1] Average EO-content = Calculated from signal ratio of alcohol-chain to ethoxy groups in NMR-spectrum
[2] Number of EO-units = (MW of alcohol ethoxylate - MW of alcohol) / 44 g/mol
[3] Molecular weight of alcohol = Average molecular weight from gas chromatogram
[4] The HLB-value is calculated according to the Griffin's method as follows:

$$HLB = 20 * M_h / M$$

$M_h$ = molecular weight of the hydrophilic portion of the molecule
$M$ = molecular weight of the whole molecule

[5] Molecular weight of alcohol ethoxylate = Molecular weight of alcohol / (1- Average EO-content)
[6] The solubility (time to dissolve) is determined by putting a defined amount of alcohol ethoxylate (1 g) in a beaker with 99 ml water at ambient temperature (20°C) and stirring it with a magnetic stirrer at 300 rpm until the ethoxylated alcohol was completely dissolved.

From the values in Table 1 it can be seen that the inventive alcohol ethoxylates are dissolving quicker than the comparative prior art products derived from longer primary alcohols and slower than the one derived from shorter primary alcohols. But the inventive ethoxylates are preferred to the ones derived from shorter primary alcohols as they have a higher melting range, which indicates a higher temperature stability.

Table 2: Crayon compositions according to invention.

| Composition [wt.-%] | 1 | 2 | 3 | 4 | 5 | 6 | 7* | 8* | 9* | 10* |
|---|---|---|---|---|---|---|---|---|---|---|
| 20+N-50 | 35 | | 84 | | | | | | | |
| 20+N-150 | | 35 | | 84 | | | | | | |
| 20+-100 | | | | | | 35 | | | | |
| 20+-75 | | | | | 35 | | | | | |
| Alfonic 1214-30 | | | | | | | 35 | 84 | | |
| UNITHOX 490 | | | | | | | | | 35 | |
| Filler (CaCO$_3$) | 63 | 63 | 14 | 14 | 63 | 63 | 63 | 14 | 63 | 25.5 |
| Stearic acid | | | | | | | | | | 38.8 |
| Pigment (Violet 19)** | 2 | 2 | 2 | 2 | 2 | 2 | 2 | 2 | 2 | 2.2 |
| Sorbitan Monostearate | | | | | | | | | | 1 |
| Paraffin wax | | | | | | | | | | 4 |
| Polyoxyethylene nonyl phenol ether | | | | | | | | | | 3 |
| PEG 4000 | | | | | | | | | | 25.5 |

* Comparative examples according to US5417746, US5380357 and EP0434163.
** Violet 19 is a Quinacridone-based pigment.

The crayon compositions 1 to 10 were drawn onto a linoleum tile and water was run at a constant force and pressure from the sink across each section of the tile for 15 seconds. Formulations 1 - 6 and 9 were completely washed away while formulation 10 was not removed at all and formulations 7 and 8 were only partially removed.

Furthermore, a scrub test was performed to see what influence mechanical force has on removing crayon from the linoleum tiles. A modification of the method according ASTM D-4828 (Practical Washability of Organic Coatings) was used for this. A Gardner Abrasion Tester II Scrubber was used with a scrub rate of 37 strokes per minute. Soiled tiles were scrubbed for 50 strokes with a tap-water soaked sponge. One gram of each crayon formulation was melted and applied to an individual tile and then allowed to solidify. The weight of the tile and formulation was measured before and after the scrub test once the water on the tile had dried.

The results of the scrub tests are set out in Table 3 and clearly show that the inventive crayon compositions can be more easily removed than the prior art crayon compositions.

Advantageously, the inventive compositions can accommodate a larger filler loading which is beneficial in terms of lowering the cost of the crayon composition, while providing superior removal attributes compared to the prior art compositions.

Table 3: Results of scrub test of the produced crayon compositions.

| Composition | Tile weight before scrub [g] | Tile weight after scrub [g] | Composition removed [g] | Removal % |
|---|---|---|---|---|
| 1 | 84.71 | 84.13 | 0.58 | 56% |
| 2 | 89.55 | 88.72 | 0.83 | 93% |
| 3 | 87.78 | 87.29 | 0.49 | 49% |
| 4 | 85.16 | 84.65 | 0.51 | 60% |
| 5 | 85.21 | 84.49 | 0.72 | 75% |
| 6 | 88.67 | 87.82 | 0.85 | 82% |
| 7* | 85.89 | 85.43 | 0.46 | 54% |
| 8* | 85.23 | 84.57 | 0.66 | 77% |
| 9* | 84.98 | 84.31 | 0.67 | 79% |
| 10* | 89.07 | 89.02 | 0.05 | 5.6% |

The inventive compositions could also be used as a watercolor.

While working with the various samples, it was observed that on a simple snap-break test the materials of the invention broke and presented relatively few if any sharp edges or flakes. In contrast, the comparative materials in a similar test gave undesirable sharp edges and flakes. While not wishing to be bound by theory, it is believed that the compositions of the invention exhibit a different rate of solidification and crystallization due to being a narrow-range ethoxylated alcohol and of defined EO content, compared to the comparative materials, leading to fewer stress lines in the cooled product. The presence of stress lines is believed to encourage formation of sharp edges and flakes in a snap-break test.

In summary the inventive alcohol ethoxylates clearly overcome the disadvantages of the prior art and provide superior water-soluble coloring compositions.

## Claims

1. A water-soluble coloring composition comprising

    - at least one alcohol alkoxylate of the formula (I)

$$R - O - (C_zH_{2z}O)_x - H \qquad (I)$$

    - wherein R is a linear or branched alkyl having a total number of carbon atoms from 20 to 30;
    - z has a value of 2 or 3; and
    - x has a value of from 40 to 160;

    - at least one filler; and
    - at least one coloring substance.

2. The composition according to claim 1, wherein R is a linear or branched alkyl having a total number of carbon atoms from 22 to 30, more preferably from 23 or 24 to 30 carbon atoms, and most preferably from 24 to 28 carbon atoms.

**3.** The composition according to claim 1, wherein z is 2.

**4.** The composition according to claim 1, wherein x has a value from 45 to 155, preferably from 100 to 150.

**5.** The composition according to claim 3, wherein the alcohol alkoxylate of formula (I) has, independent of each other, one or more of the following properties:

- an average EO-content of from 85 to 95 wt.-%, preferably of from 88 to 95 wt.-%;
- a hydrophilic-lipophilic balance (HLB) number of from 17 to 20, preferably of from 17.5 to 19.5;
- a hydroxyl number of from 5 to 25, preferably of from 8 to 22;
- an average molecular weight of at least 2000 g/mol, preferably of at least 5000 g/mol;
- a cloud point of from 60 to 75°C, preferably of from 65 to 73°C;
- a melting (range) of from 50 to 65°C, preferably of from 54 to 62°C;
- a time to dissolve in water of from 1200 to 4000 seconds, preferably of from 1300 to 2500 seconds, more preferably at maximum 2500 seconds.

**6.** The composition according to claim 3, wherein it comprises 10 to 90 wt.-% alcohol ethoxylate, preferably 15 to 50 wt.-% alcohol ethoxylate, more preferably 17.5 to 35 wt.-% alcohol ethoxylate.

**7.** The composition according to claim 1, wherein it comprises 90 to 10 wt.-% filler, preferably 85 to 50 wt.-% filler, more preferably 82.5 to 65 wt.-% filler, whereas the filler preferably comprises calcium carbonate, talc, bentonite clay, kaolin clay, or mixtures thereof.

**8.** The composition according to claim 1, wherein the coloring substance is active in the visual wavelength range of 400 nm to 800 nm of the electromagnetic spectrum of light, wherein the coloring substance preferably is a dye or pigment.

**9.** The composition according to claim 1, wherein the said coloring composition has a rod or stick format.

**10.** The composition according to claim 1, wherein it is a water-soluble coloring crayon,
wherein it preferably comprises 1 to 5 wt.-% pigment or dye, more preferably 1.5 to 2.5 wt.-% pigment or dye, whereas the pigment or dye preferably comprises Violet 19, Green LX-11774, Orange LX 11360, ultramarine pink, titanium dioxide, methylene blue, iron blue, red aluminum lake dye, red calcium lake dye, or mixtures thereof.

**11.** A method of producing a water-soluble coloring composition comprising the steps of

- providing an alcohol alkoxylate of the formula (I)

$$R - O - (C_zH_{2z}O)_x\text{-}H \qquad (I)$$

- wherein R is a linear or branched alkyl having a total number of carbon atoms from 20 to 30;
- z has a value of 2 or 3; and
- x has a value from 40 to 160;

- providing a filler,
- providing a coloring substance;
- melt blending said alcohol alkoxylate, filler and coloring substance under stirring and heating to obtain a melt-blend;
- shaping the melt-blend in a selected form; and
- cooling down the melt-blend so that it solidifies.

**12.** The method according to claim 11, wherein the melt-blend is shaped in the form of a rod or a stick.

**13.** The method according to claim 11 wherein the melt-blending is conducted in an injection-molding apparatus and the water-soluble coloring composition is produced by injection molding; or
wherein the melt-blending is conducted in an extruder apparatus and the water-soluble coloring composition is produced by extrusion.

**14.** The method according to claim 11, wherein the shaping of the melt-blend comprises

- decanting or pouring the melt-blend into a heated mold;
- cooling down the melt-blend in the mold with rotating blades; and
- removing, as a casting, the solidified melt-blend from the mold.

**15.** The use of an alcohol alkoxylate of the formula (I)

$$R - O - (C_zH_{2z}O)_x- H \qquad (I)$$

- wherein R is a linear or branched alkyl having a total number of carbon atoms from 20 to 30;
- z has a value of 2 or 3; and
- x has a value from 40 to 160, and

in water-soluble coloring compositions.

**16.** The use according to claim 15, wherein the alcohol alkoxylate improves the mechanical stability of the coloring compositions; the pigment dispersibility, and; the washability as well as the color development of the coloring compositions when applied to different surfaces and/or the ability to remove the coloring compositions with water from any surface to which it has been applied.


**Patentansprüche**

**1.** Wasserlösliche färbende Zusammensetzung, umfassend

- mindestens ein Alkoholalkoxylat der Formel (I)

$$R - O - (C_zH_{2z}O)_x - H \qquad (I)$$

- wobei R ein lineares oder verzweigtes Alkyl mit einer Gesamtzahl an Kohlenstoffatomen von 20 bis 30 ist;
- z einen Wert von 2 oder 3 hat; und
- x einen Wert von 40 bis 160 hat;

- mindestens einen Füllstoff; und
- mindestens eine färbende Substanz.

**2.** Zusammensetzung nach Anspruch 1, wobei R ein lineares oder verzweigtes Alkyl mit einer Gesamtzahl an Kohlenstoffatomen von 22 bis 30, bevorzugter von 23 oder 24 bis 30 Kohlenstoffatomen und am meisten bevorzugt von 24 bis 28 Kohlenstoffatomen ist.

**3.** Zusammensetzung nach Anspruch 1, wobei z 2 ist.

**4.** Zusammensetzung nach Anspruch 1, wobei x einen Wert von 45 bis 155 hat, vorzugsweise von 100 bis 150.

**5.** Zusammensetzung nach Anspruch 3, wobei das Alkoholalkoxylat der Formel (I) unabhängig voneinander eine oder mehrere der folgenden Eigenschaften aufweist:

- einen mittleren EO-Gehalt von 85 bis 95 Gew.-%, vorzugsweise von 88 bis 95 Gew.-%;
- einen Hydrophil-Lipophil-Gleichgewichts- (HLB) Wert von 17 bis 20, vorzugsweise von 17,5 bis 19,5;
- eine Hydroxylzahl von 5 bis 25, vorzugsweise von 8 bis 22;
- ein mittleres Molekulargewicht von mindestens 2000 g/mol, vorzugsweise von mindestens 5000 g/mol;
- einen Cloudpoint von 60 bis 75°C, vorzugsweise von 65 bis 73°C;
- einen Schmelz(bereich) von 50 bis 65°C, vorzugsweise von 54 bis 62°C;
- eine Auflösungszeit in Wasser von 1200 bis 4000 Sekunden, vorzugsweise von 1300 bis 2500 Sekunden, besonders bevorzugt von maximal 2500 Sekunden.

6. Zusammensetzung nach Anspruch 3, wobei sie 10 bis 90 Gew.-% Alkoholethoxylat, vorzugsweise 15 bis 50 Gew.-% Alkoholethoxylat, bevorzugter 17,5 bis 35 Gew.-% Alkoholethoxylat enthält.

7. Zusammensetzung nach Anspruch 1, wobei sie 90 bis 10 Gew.-% Füllstoff, vorzugsweise 85 bis 50 Gew.-% Füllstoff, besonders bevorzugt 82,5 bis 65 Gew.-% Füllstoff enthält, wobei der Füllstoff vorzugsweise Calciumcarbonat, Talk, Bentonit-Ton, Kaolin-Ton oder Mischungen davon enthält.

8. Zusammensetzung nach Anspruch 1, wobei die färbende Substanz im sichtbaren Wellenlängenbereich von 400 nm bis 800 nm des elektromagnetischen Lichtspektrums aktiv ist, wobei die färbende Substanz vorzugsweise ein Farbstoff oder Pigment ist.

9. Zusammensetzung nach Anspruch 1, wobei die färbende Zusammensetzung ein Stangen-- oder Stabformat aufweist.

10. Zusammensetzung nach Anspruch 1, wobei sie ein wasserlöslicher Farbstift ist,
wobei sie vorzugsweise 1 bis 5 Gew.-% Pigment oder Farbstoff, noch bevorzugter 1,5 bis 2,5 Gew.-% Pigment oder Farbstoff umfasst, wobei das Pigment oder der Farbstoff vorzugsweise Violet 19, Grün LX-11774, Orange LX 11360, Ultramarinrosa, Titandioxid, Methylenblau, stahlblau, roter Aluminiumseefarbstoff (red aluminum lake dye), roter Calciumseefarbstoff (red calcium lake dye) oder Mischungen davon umfasst.

11. Verfahren zur Herstellung einer wasserlöslichen färbenden Zusammensetzung, umfassend die folgenden Schritte

- Bereitstellung eines Alkoholalkoxylats der Formel (I)

$$R - O - (C_zH_{2z}O)_x - H \qquad (I)$$

- wobei R ein lineares oder verzweigtes Alkyl mit einer Gesamtzahl an Kohlenstoffatomen von 20 bis 30 ist;
- z einen Wert von 2 oder 3 hat; und
- x einen Wert von 40 bis 160 hat;

- Bereitstellung eines Füllstoffs,
- Bereitstellung einer färbenden Substanz;
- Schmelzmischen des Alkoholalkoxylats, des Füllstoffs und der färbenden Substanz unter Rühren und Erhitzen, um eine Schmelzmischung zu erhalten;
- Formen der Schmelzmischung in einer ausgewählten Form; und
- Abkühlung der Schmelzmischung, sodass sie sich verfestigt.

12. Verfahren nach Anspruch 11, wobei die Schmelzmischung in Form einer Stange oder eines Stabes geformt ist.

13. Verfahren nach Anspruch 11, wobei das Schmelzmischen in einer Spritzgießvorrichtung durchgeführt und die wasserlösliche färbende Zusammensetzung durch Spritzgießen hergestellt wird; oder
wobei das Schmelzmischen in einer Extrudervorrichtung durchgeführt wird und die wasserlösliche färbende Zusammensetzung durch Extrusion hergestellt wird.

14. Verfahren nach Anspruch 11, wobei das Formen der Schmelzmischung umfasst

- Dekantieren oder Gießen der Schmelzmischung in eine beheizte Form;
- Abkühlen der Schmelzmischung in der Form mit rotierenden Schaufeln; und
- Entnahme der erstarrten Schmelzmischung aus der Form als Gussstück.

15. Verwendung eines Alkoholalkoxylats der Formel (I)

$$R - O - (C_zH_{2z}O)_x - H \qquad (I)$$

- wobei R ein lineares oder verzweigtes Alkyl mit einer Gesamtzahl an Kohlenstoffatomen von 20 bis 30 ist;
- z einen Wert von 2 oder 3 hat; und
- x einen Wert von 40 bis 160 hat, und

in wasserlöslichen färbenden Zusammensetzungen.

**16.** Verwendung nach Anspruch 15, wobei das Alkoholalkoxylat die mechanische Stabilität der färbenden Zusammensetzungen, die Pigmentdispergierbarkeit und die Abwaschbarkeit sowie die Farbentwicklung der färbenden Zusammensetzungen, wenn aufgetragen auf unterschiedliche Oberflächen, und/oder die Fähigkeit, die Färbemittel mit Wasser von beliebigen Oberflächen, auf die sie aufgetragen wurden, zu entfernen, verbessert.

**Revendications**

**1.** Composition colorante hydrosoluble comprenant :

- au moins un alcoxylate d'alcool de formule (I)

$$R - O - (C_zH_{2z}O)_x - H \qquad (1)$$

- dans laquelle R est un alkyle linéaire ou ramifié ayant un nombre total d'atomes de carbone allant de 20 à 30 ;
- z a une valeur de 2 ou 3 ; et
- x a une valeur allant de 40 à 160 ;

- au moins une charge ; et
- au moins une substance colorante.

**2.** Composition selon la revendication 1, dans laquelle R est un alkyle linéaire ou ramifié ayant un nombre total d'atomes de carbone allant de 22 à 30, de manière mieux préférée de 23 ou 24 à 30 atomes de carbone, et de manière la mieux préférée de 24 à 28 atomes de carbone.

**3.** Composition selon la revendication 1, dans laquelle z est 2.

**4.** Composition selon la revendication 1, dans laquelle x a une valeur allant de 45 à 155, de préférence allant de 100 à 150.

**5.** Composition selon la revendication 3, dans laquelle l'alcoxylate d'alcool de formule (I) a, indépendamment l'une de l'autre, une ou plusieurs des propriétés suivantes :

- une teneur en OE moyenne allant de 85 à 95 % en poids, de préférence allant de 88 à 95 % en poids ;
- un équilibre hydrophile - lipophile (HLB) allant de 17 à 20, de préférence de 17,5 à 19,5 ;
- un indice hydroxyle allant de 5 à 25, de préférence de 8 à 22 ;
- un poids moléculaire moyen d'au moins 2000 g/mol, de préférence d'au moins 5000 g/mol ;
- un point de trouble allant de 60 à 75°C, de préférence de 65 à 73°C ;
- une (plage de) fusion allant de 50 à 65°C, de préférence de 54 à 62°C ;
- un temps de dissolution dans l'eau allant de 1200 à 4000 secondes, de préférence de 1300 à 2500 secondes, de manière mieux préférée d'au maximum 2500 secondes.

**6.** Composition selon la revendication 3, qui comprend 10 à 90 % en poids d'éthoxylate d'alcool, de préférence de 15 à 50 % en poids d'éthoxylate d'alcool, de manière mieux préférée de 17,5 à 35 % en poids d'éthoxylate d'alcool.

**7.** Composition selon la revendication 1, qui comprend 90 % à 10 % en poids de charge, de préférence de 85 à 50 % en poids de charge, de manière mieux préférée de 82,5 à 65 % en poids de charge, alors que la charge comprend de préférence du carbonate de calcium, du talc, de l'argile bentonite, de l'argile kaolin ou des mélanges de ceux-ci.

**8.** Composition selon la revendication 1, dans laquelle la substance colorante est active dans la plage de longueur d'ondes visuelles de 400 nm à 800 nm du spectre électromagnétique de la lumière, dans laquelle la substance colorante est de préférence un colorant ou un pigment.

**9.** Composition selon la revendication 1, ladite composition colorante ayant un format de tige ou bâtonnet.

**10.** Composition selon la revendication 1, qui est un crayon colorant hydrosoluble, qui comprend de préférence 1 à 5 % en poids de pigment ou de colorant, de manière mieux préférée de 1,5 à 2,5 % en poids de pigment ou de colorant alors que le pigment ou le colorant comprend de préférence du Violet 19, Green LX-11774, Orange LX 11360, rose ultramarin, dioxyde de titane, bleu de méthylène, bleu iron, colorant rouge aluminium lake, colorant rouge calcium lake ou un mélange de ceux-ci.

**11.** Procédé de production d'une composition colorante hydrosoluble comprenant les étapes consistant à :

- fournir un alcoxylate d'alcool de formule (I)

$$R - O - (C_zH_{2z}O)_x - H \qquad (1)$$

- dans laquelle R est un alkyle linéaire ou ramifié ayant un nombre total d'atomes de carbone allant de 20 à 30 ;
- z a une valeur de 2 ou 3 ; et
- x a une valeur allant de 40 à 160 ;

- fournir une charge,
- fournir une substance colorante ;
- mélanger en fusion ledit alcoxylate d'alcool, ladite charge et substance colorante sous agitation et chauffage pour obtenir un mélange en fusion ;
- mettre en forme le mélange en fusion en une forme sélectionnée ; et
- refroidir le mélange en fusion de telle sorte qu'il se solidifie.

**12.** Procédé selon la revendication 11, dans lequel le mélange en fusion est façonné sous la forme d'une tige ou d'un bâtonnet.

**13.** Procédé selon la revendication 11, dans lequel le mélange en fusion est effectué dans un appareil de moulage par injection et la composition colorante hydrosoluble est produite par moulage par injection ; ou
dans lequel le mélange en fusion est réalisé dans une extrudeuse et la composition colorante hydrosoluble est produite par extrusion.

**14.** Procédé selon la revendication 11, dans lequel la mise en forme du mélange en fusion comprend

- la décantation ou le versement du mélange en fusion dans un moule chauffé ;
- le refroidissement du mélange en fusion dans le moule avec des pales rotatives ; et
- l'élimination, en tant que moulage, du mélange en fusion solidifié hors du moule.

**15.** Utilisation d'un alcoxylate d'alcool de formule (I)

$$R - O - (C_zH_{2z}O)_x - H \qquad (1)$$

- dans laquelle R est un alkyle linéaire ou ramifié ayant un nombre total d'atomes de carbone allant de 20 à 30 ;
- z a une valeur de 2 ou 3 ; et
- x a une valeur allant de 40 à 160 ;

dans des compositions colorantes hydrosolubles.

**16.** Utilisation selon la revendication 15, dans laquelle l'alcoxylate d'alcool améliore la stabilité mécanique des compositions colorantes ; la dispersibilité du pigment et ; la lavabilité ainsi que le développement de la couleur des compositions colorantes lorsqu'elles sont appliquées à différentes surfaces et/ou la capacité à éliminer les compositions colorantes avec de l'eau de toute surface sur laquelle elles ont été appliquées.

**REFERENCES CITED IN THE DESCRIPTION**

**Patent documents cited in the description**

- US 63004097 B
- WO 9004621 A
- EP 0434163 A
- US 5380357 A
- US 20130195784 A
- US 20190048220 A
- US 4754075 A
- US 4775653 A
- US 4835321 A
- US 5220077 A
- US 5626121 A
- US 8329609 B
- US 9802879 B
- US 5417746 A